# EUROPÄISCHE PATENTSCHRIFT

(11) **EP 0 369 303 B1**
(45) Veröffentlichungstag und Bekanntmachung des Hinweises auf die Patenterteilung: **06.03.1996**
(21) Anmeldenummer: 89120648.4
(22) Anmeldetag: 08.11.1989
(51) Int. Cl.: G09G 1/00, H04N 5/45, H04N 7/084, G09G 1/02

(54) **Bild-im-Bild Speicherverfahren**
Picture-in-picture image storing method
Procédé de mémorisation pour une image intégrée dans une autre image

(30) Priorität: 17.11.1988 DE 3838827
(43) Veröffentlichungstag der Anmeldung: 23.05.1990
(73) Patentinhaber: Deutsche Thomson-Brandt GmbH, D-78010 Villingen-Schwenningen (DE)
(72) Erfinder: Guillon, Jean-Claude, F-67150 Erstein (FR); Rufray, Jean-Claude, F-67200 Mittelhausbergen (FR)

(56) Entgegenhaltungen:
- EP-A- 0 258 803
- US-A- 3 436 471
- US-A- 4 254 434
- US-A- 4 647 971
- IEEE TRANSACTIONS ON CONSUMER ELECTRONICS Band CE-33, Nr. 3, August 1987, Seiten 230-238, New York; M. MASUDA et al.: "Picture in picture system with a digital memory for VCRS"

## Beschreibung

Die Erfindung betrifft ein Bild-im-Bild-Speicher verfahren

Es sind Bildwiedergabesysteme bekannt, die gleichzeitig ein Bild einer ersten Quelle, insbesondere einer ersten Empfangsfrequenz, nachfolgend Hauptbild genannt, und ein Bild einer zweiten Quelle, insbesondere einer zweiten Empfangsfrequenz, nachfolgend reduziertes Bild genannt, wiedergeben, wobei das reduzierte Bild auf dem Bildwiedergabeschirm einen Teil des Schirms beschreibt, der von dem Hauptbild beschrieben wurde. Um diese Aufteilung des Bildschirmes zu erreichen, ist es bekannt, einen Bildspeicher für das reduzierte Bild zu verwenden. Für das Hauptbild wird ein separater Bildspeicher verwendet. Beide Speicher werden synchron geschrieben und ausgelesen. Ein Controller steuert die Ausgabe der Bildinformationen aus den Speichern, die dem Bildschirm zugeführt werden. Als Speicher können bekannte dynamische oder statische Speicher verwendet werden.

Es sind weiterhin Schaltungen bekannt, mit deren Hilfe man eine höhere Bildfrequenz erzeugen und somit das Bild mit einer erhöhten Bildwiedergabefrequenz wiedergeben kann. Dazu werden zwei Vollbildspeicher verwendet, wobei in den einen Vollbildspeicher ein erstes wiederzugebendes Bild gespeichert wird, während zur gleichen Zeit aus dem anderen Vollbildspeicher das dort gespeicherte Bild zweimal ausgelesen wird. Auf diese Art und Weise werden zwei Bilder wiedergegeben, während das eine Bild gespeichert wird.

Für ein Bildwiedergabesystem mit zwei gleichzeitig dargestellten Bildern unterschiedlicher Empfangsfrequenzen kann z.B. ein Bildspeicher zum Speichern des reduzierten Bildes verwendet werden, während der andere Speicher die Kombination des Hauptbildes und des reduzierten Bildes für die frequenzerhöhte Bildwiedergabe speichert. Bei der Verwendung von zwei Bildspeichern sind jedoch zusätzlich zwei Controller notwendig, welche den Preis einer solchen Schaltungsanordnung zusätzlich erhöhen. Zur Erhöhung der Bildwiedergabefrequenz ist es bekannt, ein Bild in nur einen Vollbildspeicher zu speichern. Bei Verwendung von handelsüblichen Speichern wird dann ein Schreibzyklus abgelöst von zwei Lesezyklen, so daß im Mittel zwei Bilder ausgelesen werden, während eins eingeschrieben wird. Wenn man als Speicher einen Bildspeicher mit zwei Schnittstellen verwendet, wobei die eine Schnittstelle für den Eingang und die zweite Schnittstelle für den Ausgang zuständig ist, können die Daten simultan eingeschrieben sowie aus dem Speicher ausgelesen werden.

In "Picture in Picture system with a digital memory for VCRS", M. Masuda et al., IEEE TRANSACTIONS ON CONSUMER ELECTRONICS, Band CE-33, Nr.3, August 1987, Seiten 230-238, New York, NY, USA und in EP-A-258 803 werden Bild-im-Bild-Systeme mit einem Speicher beschrieben, in den jedoch nur ein in seiner Größe reduziertes Bild eingeschrieben wird. Das nachfolgend ausgelesene reduzierte Bild wird in der analogen Ebene mit dem Hauptbild gemischt und wiedergegeben. Im ersten Dokument werden sichtbare Störungen eliminiert, die durch mangelhafte Synchronisation des Hauptbildes mit dem verkleinerten Bild bedingt sind. Im zweiten Dokument wird eine Möglichkeit gezeigt, wie die Größe und Lage des verkleinerten Bildes in Bezug auf das Hauptbild verändert werden kann.

Der Erfindung liegt die Aufgabe zugrunde, ein vereinfachtes Bild-im-Bild-Speicher verfahren unter Bohutzung nur eines einzigen Bildspeichers für die Speicherung eines reduzierten Bildes in einem Hauptbild anzugeben.

Diese Aufgabe wird durch die im Anspruch 1 angegebenen Merkmale gelöst. Eine Vorteilhafte Weiterbildung der Erfindung ist im Unteranspruch 2 an gegeben.

Erfindungsgemäß werden die in digitaler Form vorliegenden Daten des Hauptbildes und des reduzierten Bildes in nur einen einzigen Bildspeicher gespeichert. Als Speicher wird ein Bildspeicher mit zwei Schnittstellen verwendet, so daß der Speicher simultan beschrieben und ausgelesen werden kann. Damit sowohl das Hauptbild als auch das reduzierte Bild mit einem Bildspeicher eingeschrieben werden können, werden die Teile der Zeile, welche wegen der Zeilenausstastlücke keine Information enthalten, dazu verwendet, die Daten des reduzierten Bildes in den Vollbildspeicher einzuschreiben. Obwohl die Zeit der Zeilenausstastlücke erheblich kleiner ist als die Zeit, in der die Zeile Information enthält, ist dieser Schreibvorgang möglich, da die Datenmenge, die für das reduzierte Bild benötigt wird, sehr viel kleiner sind als die Datenmenge des Hauptbildes. Da ein reduziertes Bild eine kleinere Bildschirmfläche als das Hauptbild beschreibt, es jedoch ein vollständiges Bild darstellen soll, ist vor der Speicherung eine Reduktion in horizontaler und vertikaler Richtung durchzuführen. Die Datenmenge des reduzierten Bildes hängt dann von der Unterabtastrate ab und liegt zwischen einem Neuntel und einem Zweiunddreißigstel des Hauptbildes.

Nachstehend wird ein Ausführungsbeispiel an Hand der Zeichnung erläutert. Es zeigen:
- Fig. 1: einen Bildspeicher
- Fig. 2: Abtastwerte
- Fig. 3: Schreibvorgang des reduzierten Bildes
- Fig. 4: Schreibvorgang des reduzierten Bildes mit Verzögerung des Hauptbildes
- Fig. 5: Schaltung zur Speicherung mit verzögertem Hauptbild.

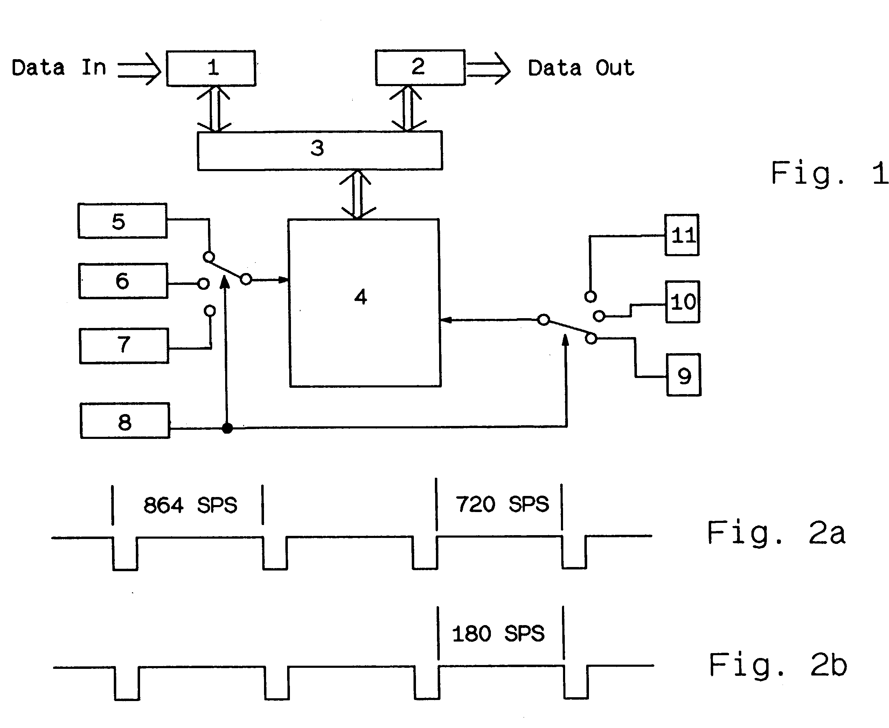

Fig. 1 zeigt einen erfindungsgemäß verwendeten Bildspeicher. Die zu verarbeiteten Bildinformationen "Data In "werden zu einer Eingangsschnittstelle 1 zugeführt, welche über Datenleitungen mit einer Bildspeicherschnittstelle 3 verbunden ist. Die Bildspeicherschnittstelle 3 ist mittels Datenleitungen sowohl mit einem Bildspeicher 4 als auch mit einer Ausgangsschnittstelle 2 verbunden. Die verarbeiteten Bildinformationen "Data out" sind an Datenausgängen der Ausgangsschnittstelle 2 abgreifbar. Die Adressierung des Bildspeichers 4 geschieht mittels drei Zählern 5, 6, 7 für die horizontale Adressierung und drei Zählern 9, 10, 11 für die vertikale Adressierung. Ein Controller 8 übernimmt die Steuerung der Adressierung. Die Zähler 5, 9 sind zuständig für die Adressen des einzuschreibenden Hauptbildes. Die Zähler 6, 10 sind zuständig für die Adressen des einzuschreibenden reduzierten Bildes und die Zähler 7, 11 sind für das richtig adressierte Auslesen des gesamten Speichers 4 zuständig.

Die Eingangs- und Ausgangsschnittstellen 1, 2 werden mit der Videoabtastfrequenz getaktet. Die Eingangsschnittstelle 1 wird mit einem kontinuierlichen Eingangsdatenfluß "Data IN" versorgt. Die Ausgangsschnittstelle 2 erhält ebenfalls einen kontinuierlichen Ausgangsdatenfluß "Data out". Die Datenflußrate der beiden Schnittstellen 1, 2 kann die gleiche sein, wenn die Bilder z.B. 50 Hz Bildwiedergabefrequenz wiedergegeben werden. Sie können jedoch auch unterschiedlich sein, wenn die Bilder mit z.B. 100 Hz Bildwechselfrequenz wiedergegeben werden.

Fig. 2 zeigt die Abtastwerte für das Hauptbild und für das reduzierte Bild. Wenn z.B. die Taktfrequenz des Hauptbildes 13,5 MHz beträgt, sind pro Zeile 864 Bildpunkte SPS darstellbar. Von diesen 864 Bildpunkten SPS sind jedoch nur 720 Bildpunkte SPS in einer aktiven Zeile vorhanden. Soll z.B. das reduzierte Bild eine Größe aufweisen, die ein Viertel in horizontaler und vertikaler Richtung des Hauptbildes beträgt, dann sind nur 180 Bildpunkte SPS für jede Zeile des reduzierten Bildes zu speichern. In vertikaler Richtung hat das reduzierte Bild dann nur eine Zeile, während das Hauptbild vier Zeilen aufweist. Im Durchschnitt ist es notwendig, 180 Bildpunkte SPS des reduzierten Bildes in vier Ausschnitten von je 144 Punkten der Zeilenausstastlücken des Hauptbildes zu schreiben.

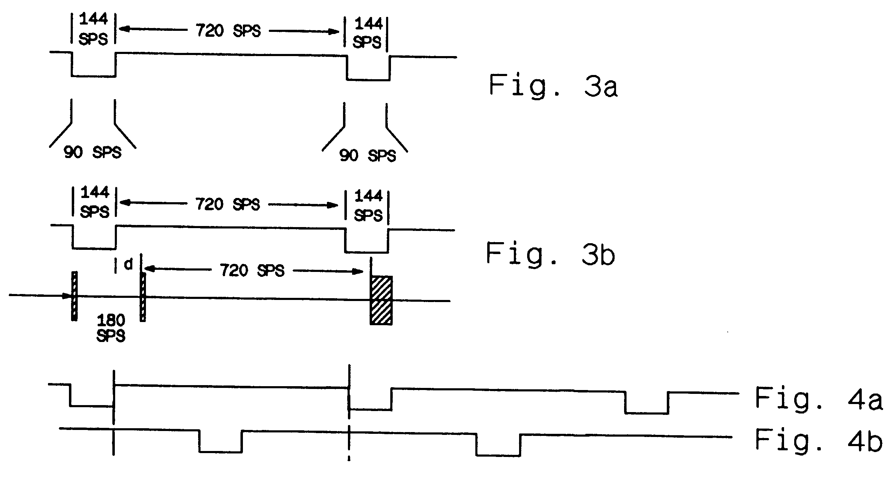

Um 180 Abtastwerte SB des reduzierten Bildes während der Zeit der Zeilenausstastlücke eines Hauptbildes in den Bildspeicher 4 zu speichern, sind zwei Lösungen möglich:
A) Man schreibt die Hälfte einer Zeile eines reduzierten Bildes während der Zeitdauer von zwei Zeitintervallen benachbarter Zeilen des Hauptbildes, und zwar in der Zeit der Zeilenausstastlücke. Fig. 3a
B) Man schreibt eine komplette Zeile des reduzierten Bildes während der Zeitdauer des Zeilenlaufs des Hauptbildes und verzögert des aktiven Teil einer Zeile des Hauptbildes. Fig. 3b

Fig. 3 zeigt das Prinzip des Schreibvorganges der Daten eines reduzierten Bildes in den Hauptspeicher 4. Während der Zeilenausstastlücke des Hauptbildes können die Hälfte einer Zeile, (Fig. 3a) bestehend aus neunzig Bildpunkten SPS, des reduzierten Bildes in den Hauptspeicher 4 geschreiben werden. Dafür steht eine Zeit von 144 Bildpunkten SPS zur Verfügung. Für die richtige Adressierung sind die Zähler 6, 10 sowie der Controller 8 zuständig. Gemäß Fig. 3b kann die komplette Zeile des reduzierten Bildes von 180 Bildpunkten SPS in den Hauptspeicher geschrieben werden. Dann muß jedoch die folgende Zeile des Hauptbildes um einen mindestens 36 Bildpunkte verzögert werden. Das ist mittels eines Zeilenspeichers oder Puffers mit geringer Speicherkapazität leicht zu realisieren. Wie Fig. 3b zu entnehmen ist, ist eine weitere Verzögerung der darauffolgenden Zeile des Hauptbildes nicht mehr erforderlich, da die 144 Bildpunkte der Zeilenausstastlücke der zweiten Zeile des Hauptbild diese ausgleicht.

Fig. 4 zeigt den Schreibvorgang einer Zeile des reduzierten Bildes bei der Verzögerung des Schreibvorganges der Zeile des Hauptbildes. In Fig. 4a ist der Zeitbedarf einer Zeile des Hauptbildes von 720 Bildpunkten SPS angegeben. Während der Zeit von 144 Bildpunkten, also während der Zeilenausstastlücke, sind keine Bildinformationen des Hauptbildes zu speichern. Fig. 4b zeigt die Speicherung sowohl einer Zeile des reduzierten als auch des Hauptbildes. Es werden alle 180 Bildpunkte des reduzierten Bildes gespeichert. Dazu muß die Zeile des Hauptbildes für die Zeit von 36 bis maximal 144 Bildpunkten verzögert werden. Nach Schluß des Schreibvorganges dieser Zeile wird sofort eine volle Zeile des Hauptbildes gespeichert, so daß die Verzögerung wieder ausgeglichen wird.

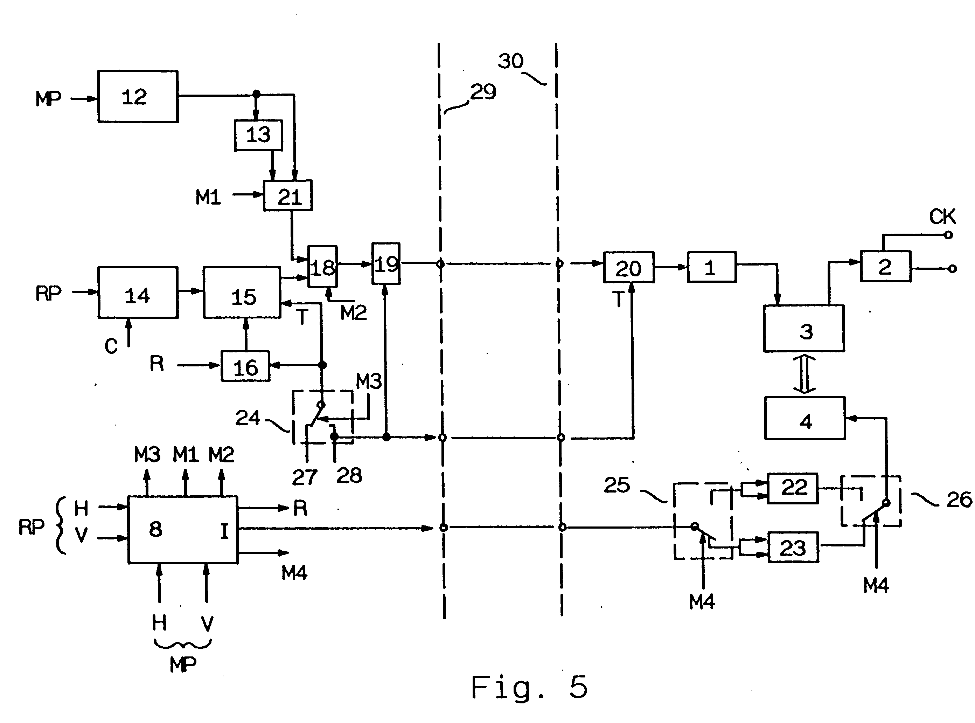

Fig. 5 zeigt die Schaltung zur Speicherung mit verzögertem Hauptbild MP. Das Hauptbild MP wird einer Signalverarbeitungsschaltung 12 zugeführt, in der z.B. die Bildpunkte digitalisiert werden und eine Datenreduktion durchgeführt werden kann. Die Ausgangsdatenleitungen der Signalverarbeitungsschaltung 12 führen einerseits über eine Verzögerungsschaltung 13 als auch direkt auf Eingänge eines Flip-Flops 21. Das zu reduzierende Bild RP wird einer Signalverarbeitungsschaltung 14 zugeführt, in der eine Unterabtastung mit Takt C stattfindet. Das Ausgangssignal der Signalverarbeitungsschaltung 14 wird einem Puffer 15 zugeführt, der die Daten zwischenspeichert. Der Puffer 15 wird von einem Zähler 16 adressiert. Der Puffer 15 und der Zähler 16 werden vom selben Takt T getaktet. Außerdem hat der Zähler 16 einen Reseteingang R, der den Zähler 16 auf einen vorbestimmten Wert zurücksetzt, wenn der Schreibvorgang in den Puffer 15 beendet ist. Der dem Zähler 16 und dem Puffer 15 zugeführte Takt T wird durch einen Ausgang M3 des Controllers 8 umgeschaltet, je nach dem, ob der Puffer 15 beschrieben oder ausgelesen wird. Soll der Puffer 15 beschrieben werden, wird ein Schalter 24 auf den Schreibtakt 27, soll er gelesen werden, auf den Lesetakt 28 umgeschaltet. Die Ausgangsdatenleitungen des Puffers 15 führen auf ein Flip-Flop 18. Die Datenausgangsleitungen des Flip-Flops 21 führen auf einen weiteren Eingang des Flip-Flops 18. Das Flip-Flop 18 ist über eine Datenleitung M2 mit dem Controller 8 verbunden. Die Ausgangsdatenleitungen des Flip-Flops 18 sind mit einem D-Flip-Flop 19 verbunden. Dieses D-Flip Flop 19 ist mit dem Lesetakt 28 des Puffer 15 und des Zählers 16 verbunden. Die Ausgangsdatenleitungen des D-Flip-Flops 19 führen über ein D-Flip-Flop 20 auf die Eingangsschnittstelle 1 des Bildspeichers 4. Über die Bildspeicherschnittstelle 3 werden die Daten in Bildspeicher 4 geschrieben. Über weitere Steuerleitungen ist der Controller 8 mit Adressenzählern 22, 23 verbunden. Das Ausgangssignal M4 des Controllers 8 steuert Umschalter 25, 26, die die Adressenzähler 22, 23 für die Adressierung des Bildspeichers 4 umschalten. Die Adressenzähler 22, 23 entsprechen den Zählern 5 6, 7 bzw. 9, 10, 11. Die Ausgangsschnittstelle 2 wird mittels eines Taktes CK getaktet. Der Umschalter 24 wird durch ein Ausgangssignal M3 des Controllers 8 gesteuert, die Umschalter 25, 26 werden durch das Signal M4 des Controllers 8 gesteuert.

Die Schaltung nach Fig. 5 ist in zwei Teile untergliedert. Im ersten Teil 29 wird die Signalverarbeitung des reduzierten Bildes und des Hauptbildes durchgeführt. Im zweiten Teil 30 werden die Signale des reduzierten Bildes RP und des Hauptbildes MP in den Bildspeicher 4 gespeichert und für eine Bildwiedergabe zeilensequentiell ausgelesen. Die Auswahl zwischen den Signalen des reduzierten und des Hauptbildes im ersten Teil wird mittels des Multiplexers 18 getroffen.

Die Signalverarbeitung für das Hauptbild findet wie folgt statt:
Das Signal des Hauptbildes MP kann auf den Multiplexer 18 über zwei Wege geführt werden:
Über die Signalverarbeitungsschaltung 12 werden die Daten des Hauptbildes direkt auf den Multiplexer 18 geführt. Dieser Weg wird verwendet, wenn kein reduziertes Bild innerhalb der Zeilenausstastlücke in den Speicher 4 eingeschrieben werden soll.

Sind jedoch Daten des reduzierten Bildes in den Speicher 4 einzuschreiben, werden die Daten des Hauptbildes über eine Verzögerungsschaltung 13 dem Multiplexer 18 zugeführt. Die Verzögerungsschaltung 13 bewirkt eine Verzögerung von n x T. Diese Verzögerung ist notwendig, damit eine vollständige Zeile des reduzierten Bildes, beginnend mit der Zeilenausstastlücke, in den Speicher 4 eingeschrieben werden und dieser Schreibvorgang über den Beginn der aktiven Zeile der nächsten Zeile des Hauptbildes fortdauern kann.

Der kleinste Wert der Zeitverzögerung T ist n = 36 (180 - 144 = 36) der größte Wert beträgt n = 144. Dies ist dann der Fall, wenn die Zeilen m und m+1 des Hauptbildes ohne freien Raum zwischen ihnen geschrieben werden müssen.

Das Hauptbild wird in den Hauptspeicher 4 innerhalb der Adressierung der Adressenzähler 22 geschrieben.

Die Signalverarbeitung für das reduzierte Bild wird wie folgt durchgeführt. Der Ausgang der Signalverarbeitungsschaltung 15 liefert alle vier Zeilen ein Signal des reduzierten Bildes. Jede Zeile besteht aus 180 Abtastwerten. Diese Daten werden in den Puffer 15 geschrieben. Der Schreibtakt könnte z. B. 3,375 MHz betragen, also ein viertel der Taktrate des Hauptbildes. Die erste Adresse, in welche die Daten des reduzierten Bildes geschrieben werden müssen, werden durch den durch Reset zurückgesetzte Adressenzähler 16 geliefert.

Nachdem eine vollständige Zeile des reduzierten Bildes in den Puffer 15 geschrieben worden ist, wartet der Controller 8 auf den Beginn der nächsten Zeilenaustastlücke einer Zeile des Hauptbildes.

Zu Beginn dieser Zeilenaustastlücke ist das System vorprogrammiert, um das reduzierte Bild in der richtigen Reihenfolge in den Hauptspeicher 4 zu schreiben.

Das bedeutet, daß der Multiplexer 21 so geschaltet ist, daß das Originalbild um n x T verzögert wird. Der Multiplexer 18 ist auf die Position für das reduzierte Bild geschaltet. Der Hauptspeicher 4 wird mit dem Signal des reduzierten Bildes versorgt. Der Umschalter 24 ist vom Controller 8 auf den Lesetakt 28 geschaltet. Das Schaltsignal M4 des Controllers 8 hat die Umschalter 25, 26 auf die Adressenzähler 23 geschaltet. Diese Adressenzähler 23 zeigen auch die Adressen des Speichers 4, in die das reduzierte Bild eingeschrieben werden soll.

Nachdem das reduzierte Bild nach 180 Taktzyklen in den Speicher 4 eingeschrieben worden ist, werden den Multiplexer 18, sowie den Umschaltern 24, 25 und 26 wieder zurückgeschaltet in die Position zur Hauptbildverarbeitung. Die Adressenzähler 22 übernehmen wieder die Adressierung des Speichers 4. Der Multiplexer 21 verbleibt in der Position auf Verzögerung des Hauptbildes während der kompletten folgenden Zeile des Hauptbildes. Er wird erst durch das Signal M1 des Controllers zurückgeschaltet mit Beginn der nächsten Zeilenaustastlücke des Hauptbildes MP. Als Puffer 15 können z.B. Schieberegister, Speicher oder fist-in first-out Schieberegister verwendet werden.

## Patentansprüche

1. Bild-im-Bild-Speicherverfahren, bei dem Daten eines gegenüber dem Hauptbild (MP) verkleinerten Bildes (RP) in einem Speicher (4) gespeichert werden und bei einer Wiedergabe mit denen des Hauptbildes kombiniert sind, **dadurch gekennzeichnet**, daß die Daten des Hauptbildes ebenfalls in diesem Speicher (4) gespeichert werden, wobei die vorzugsweise unterschiedlich vom Takt des Hauptbildes getakteten Daten des - insbesondere horizontal und vertikal - verkleinerten Bildes so in den Speicher eingeschrieben werden, daß entweder jeweils
- ein erster Teil der Daten einer Zeile des verkleinerten Bildes (RP) während der Zeilenaustastlücke einer Zeile des Hauptbildes (MP) in den Speicher geschrieben wird und
- der restliche Teil der Daten der Zeile des verkleinerten Bildes während der darauffolgenden zeilenaustastlücke oder - lücken des Hauptbildes in den Speicher geschrieben wird, wobei die Daten einer zeile des Hauptbildes jeweils während zeitintervallen zwischen zwei benachbarten zeilen austastlücken des Hauptbildes in den Speicher eingeschrieben werden, oder jeweils
- die Daten einer Zeile des verkleinerten Bildes (RP) während der Zeilenaustastlücke und des sich daran anschließenden ersten aktiven Teils einer Zeile des Hauptbildes (MP) in den Speicher geschrieben werden;
- nachfolgend die Daten einer Zeile des Hauptbildes während des zweiten aktiven Teils dieser Zeile und bis in die darauffolgende Zeilenaustastlücke des Hauptbildes hinein in den Speicher geschrieben werden, und die Daten einer weiteren zeile des verkleinerten Bildes (RP) erst in einer nächst folgenden zeilenaustast lücke eingeschrieben werden.

2. Speicherverfahren nach Anspruch 1, **dadurch gekennzeichnet**, daß der Speicher (4) mit erhöhter - insbesondere verdoppelter
- Bildwiedergabefrequenz ausgelesen wird.

## Claims

1. A picture-in-picture storage method wherein data of a picture (RP), reduced in relation to the main picture (MP), are stored in a memory (4) and on reproduction are combined with the data of the main picture, characterised in that the data of the main picture are likewise stored in this memory (4), where the data of the - in particular horizontally and vertically - reduced picture, which preferably are clocked differently from the clock rate of the main picture, are input into the memory in such manner that either in each case
- a first part of the data of a line of the reduced picture (RP) is input into the memory during the line blanking interval of a line of the main picture (MP) and
- the remaining part of the data of the line of the reduced picture is input into the store during the following line blanking interval or intervals of the main picture, where the data of a line of the main picture are input into the store in each case during time intervals between two adjacent line blanking intervals of the main picture or in each case
- the data of a line of the reduced picture (RP) are input into the memory during the line blanking interval and the following, first active part of a line of the main picture (MP),
- whereupon the data of a line of the main picture are input into the memory during the second active part of this line and into the following line blanking interval of the main picture and the data of a further line of the reduced picture (RP) are not input until a next line blanking interval.

2. A storage method as claimed in claim 1, characterised in that the memory (4) is read with an increased - in particular doubled - picture reproduction frequency.

## Revendications

1. Procédé d'enregistrement image dans image où les données d'une image réduite (RP) par rapport à l'image principale (MP) sont enregistrées dans une mémoire (4) et combinées à celles de l'image principale lors de la reproduction, **caractérisé en ce** que les données de l'image principale sont également stockées dans ladite mémoire (4), sachant que les données de l'image réduite - notamment dans les sens horizontal et vertical - qui sont, de préférence synchronisées différemment par rapport à l'impulsion de synchronisation de l'image principale, sont enregistrées dans la mémoire de telle manière
- qu'une première partie des données d'une ligne de l'image réduite (RP) soit enregistrée dans la mémoire durant l'intervalle de suppression de ligne d'une ligne de l'image principale (MP) et
- que le restant des données de la ligne de l'image réduite soit enregistré dans la mémoire durant le (les) prochain(s) intervalle(s) de suppression de ligne de l'image principale, tandis que les données d'une ligne de l'image principale sont enregistrées dans la mémoire pendant les intervalles de temps entre deux intervalles de suppression de ligne adjacents de l'image principale, ou
- que les données d'une ligne de l'image réduite (RP) soient enregistrées dans la mémoire durant l'intervalle de suppression de ligne et la partie active consécutive d'une ligne de l'image principale (MP),
- et que les données d'une ligne de l'image principale soient enregistrées dans la mémoire durant la seconde partie active de cette ligne et jusque dans l'intervalle de suppression de ligne de l'image principale, tandis que les données d'une autre ligne de l'image réduite (RP) sont enregistrées seulement durant un intervalle de suppression de ligne consécutif.

2. Procédé d'enregistrement selon la revendication 1 **caractérisé en ce** que les données contenues dans ladite mémoire (4) sont sorties à une fréquence supérieure à la fréquence de reproduction d'image, et notamment à la double fréquence de reproduction d'image.
